# NEUE EUROPÄISCHE PATENTSCHRIFT

(11) **EP 1 193 220 B2**
(45) Veröffentlichungstag und Bekanntmachung des Hinweises auf die Entscheidung über den Einspruch: **20.01.2016**
(45) Hinweis auf die Patenterteilung: 24.09.2003
(21) Anmeldenummer: 01119007.1
(22) Anmeldetag: 07.08.2001
(51) Int. Cl.: C01B 33/193

(54) **Dotierte Fällungskieselsäure**
Doped precipitated silica
Silice de précipitation dopée

(30) Priorität: 30.09.2000 DE 10048616
(43) Veröffentlichungstag der Anmeldung: 03.04.2002
(73) Patentinhaber: Evonik Degussa GmbH, 45128 Essen (DE)
(72) Erfinder: Schubert, Jürgen, Dr., 53343 Wachtberg (DE); Hellwig, Klaus-Dieter, 53604 Bad Honnef (DE); Müller, Astrid, 63776 Mombris (DE)
(74) Vertreter: Godemeyer Blum Lenze Patentanwälte Partnerschaft mbB - werkpatent

(56) Entgegenhaltungen:
- EP-A- 0 493 263
- DE-A1- 3 014 007
- US-A- 5 800 608
- US-A- 5 852 099
- P. ALBERS ET AL.: 'SIMS/XPS Study on the Deactivation and Reactivation of B-MFI Catalysts Used in the Vapour-Phase Beckmann Rearrangement' JOURNAL OF CATALYSIS Bd. 176, 1998, Seiten 561 - 568
- Ullmann's Encyclopedia of Industrial Chemistry:"Surface and thin-film analysis, Kap. 2.1.4.3" 2002, Wiley-VCH Verlag GmbH & Co. KG
- B. ELVERS ET AL.: 'Ullmann's Encyclopedia of Industrial Chemistry', Bd. 5, 31 Dezember 1993, VCH VERLAGSGESELSCHAFT MBH, WEINHEIM Seiten 644-645 - 658-659
- 'Degussa: "Schriftenreihe Pigmente', Bd. 16, 31 Dezember 1990 Seiten 16 - 17

## Beschreibung

Die Erfindung betrifft Fällungskieselsäure, die mit Aluminiumoxid dotiert ist, ein Verfahren zu deren Herstellung und die Verwendung dieser aluminiumdotierten Fällungskieselsäuren.

Kieselsäuren und Alurniniumsilikate, welche durch Fällung mittels Natriumsilikatlösung und Schwefelsäure, Natriumsilikatlösung und anschließender Zugabe eines löslichen Metallsalzes hergestellt wurden, sind bekannt. Bei diesen Herstellprozessen werden auf unterschiedliche Weise Metallionen in Form ihrer Salze oder deren Lösungen zugesetzt, so z.B. Zr, Ti, Zn-Ionen. Diese Ionen können auch chemische Bindungen mit Bestandteilen der Kieselsäure-/Silikatoberfläche eingehen und durch einfaches Waschen nicht abgespült werden. Diese Ionen erzeugen kationische Ladungen an der Oberfläche der Kieselsäuren/Silikate und sorgen hierdurch bei der Anwendung in dem Papierstrich von z. B. Inkjet-Papieren für eine Fixierung der meist anionischen Farbstoffe und für brillante Farben im Papierstrich.

Für den Einsatz in der Papierindustrie werden Füllstoffe, die zum Beispiel in Inkjet-Medien die Tinte gut absorbieren und die Brillanz der Farben erhalten, benötigt. Um die Druckgeschwindigkeit erhöhen zu können und die Druckpunktgröße beim Inkjet-Druck verringern zu können, ist eine schnelle Trocknung unabdingbar. Eine Möglichkeit, diesen Anforderungen zu entsprechen, ist das Aufbringen von kieselsäurehaltigen Beschichtungen auf die Medien. Diese Beschichtungen ermöglichen eine rasche Tintenaufnahme, verbessern die Punktschärfe und fördern die definierte kreisförmige Ausbreitung des Tintentropfens. Des weiteren verhindern sie Durchscheinen oder Durchschlagen der Tinte und erzeugen hohe Farbdichten.

Für den Einsatz in der Papierindustrie werden daher extrem leicht dispergierbare Füllstoffe benötigt, die zum Beispiel in Inkjet-Papier oder Inkjet-Folie die Tinte gut absorbieren, und die Brillanz der Farben erhalten.

### Beschreibung der Erfindung

Die Herstellung von dotierten und undotierten Kieselsäuren und Silikaten sind bereits umfangreich beschrieben, so z. B. in EP 0 643 0 15, DE 117 22 45, EP 0 798 266, DE 314 42 99 oder DE 124 50 06.

Alle dort beschriebenen Fällungen zur Herstellung der Kieselsäure beinhalten drei Verfahrensschritte 1.) Vorlegen von Wasser und optional Natriumsilikatlösung, optional Einstellung von pH, Leitfähigkeit durch Zugabe von Salzen oder deren Lösungen (z.B. Natriumsulfat) ; 2.) Fällphase: hier wird, meist durch Zugabe einer mineralischen Säure wie Schwefelsäure, das Ausfällen der Kieselsäure oder des Silikates bewirkt; 3.) Ansäuerung der Kieselsäure-/Silikatsuspension vor der weiteren Aufarbeitung. Alle drei Phasen sind gekennzeichnet durch ein bestimmtes Temperatur-, Dosier- und pH-Regime, mögliche Unterbrechungs- und/oder Zwischenstufen oder der Zugabe unterschiedliche Salze oder deren Lösungen.

Um an der Oberfläche der Kieselsäuren / Silikate kationische Stellen (Sites) zu erzeugen, werden - mindestens zweiwertige - Metallionen zur ausgefällten Kieselsäure zugegeben (EP 0 493 203). Bei diesen Metallen kann es sich um Erdalkalimetalle, Seltene Erden Metalle, Übergangmetalle (z.B. Ti, Zr, Fe, Ni, Zn) oder Aluminium handeln. Diese Metalle können als Ionen in Form ihrer Salze oder deren Lösungen zugegeben werden. Bei den Salzen kann es sich um organische Salze oder Komplexe handeln, so z.B. Carbonate, Polycarbonate oder auch anorganische Salze wie Halogenide, Oxyhalogenide, Nitrate, Phosphate, Sulfate, Oxydsulfate, Hydroxide, Oxidhydroxide.

Die genannten Ionen entfalten ihre Wirkung vor allem, wenn sie in die Oberfläche der Kieselsäuren bzw. Silikate integriert sind (chemisch gebunden und/oder physikalisch fixiert). Hierfür ist jedoch die Behandlung einer bereits gefällten Kieselsäure oder eines bereits gefällten Silikates (Suspensionen derselben) mit Salzen oder Lösungen der genannten Ionen nicht ausreichend.

EP 0 492 263 offenbart solche Kieselsäuren bzw. Verfahren. Zu deren Herstellung werden Metallsalze zur Dotierung entweder auf bereits hergestellte und resuspendierte Kieselsäure oder auf bereits gefällte aber noch nicht abfiltrierte Kieselsäuresuspensionen aufgetragen. In beiden Fällen werden die Metallionen zwar an der Oberfläche der Partikel abgeschieden, eine chemische Einbindung der Metalle in das Silikatgerüst findet jedoch nicht statt. Auf diese Weise hergestellte dotierte Kieselsäuren bluten leicht aus, bzw. die Metallionen können wieder abgegeben werden.

Kieselsäuren müssen häufig vermahlen werden, um eine bestimmte Korngröße zu erhalten. Auch nicht vermahlene Kieselsäuren werden in weiteren Verarbeitungsschritten mechanischen Belastungen (z. B. durch Vermischen oder Verkneten) ausgesetzt, die zur teilweisen Zerstörung der ursprünglichen Partikel führen.

Werden Kieselsäurepartikel, die nur an der Oberfläche mit Fremdmetallen dotiert sind, zerstört, so weisen diese kleineren Partikel Oberflächen auf, die keine Fremdatome aufweisen.

Aufgabe der vorliegenden Erfindung war daher, mit Aluminium dotierte Kieselsäuren bereitzustellen, wobei das Aluminium weitgehend in das Silikatgerüst eingebettet ist.

Gegenstand der vorliegenden Erfindung sind daher aluminiumdotierte Fällungskieselsäuren, wobei die Kieselsäurepartikel eine BET-Oberfläche von über 300 m²/g, einen Al₂O₃-Gehalt von 0,05 bis 0,5 Gew.-% und eine mittlere Teilchengröße von 5 bis <15 µm aufweisen und das Aluminium gleichmäßig in den Kieselsäurepartikeln verteilt ist.

Bevorzugt wird die Dotierung mit Al₂O₃ durchgeführt. Der Massenanteil bei Verwendung anderer Aluminiumverbindungen kann auf Al₂O₃ angerechnet werden.

Die erfindungsgemäße Kieselsäure weist bevorzugt die folgenden Parameter auf, die unabhängig oder gleichzeitig erfüllt sein können: Al₂O₃-Gehalt von 0,05 bis 0,25 Gew-%, DBP-Aufnahme von 500 bis 200g/100 g, bevorzugt von 250 bis 350 g/100 g; Teilchengröße von 5 bis 12 µm und insbesondere von 10 bis 12 µm.

Die BET-Oberfläche der erfindungsgemäßen Fällungskieselsäure liegt über 300 m²/g, bevorzugt zwischen 350 bis 800 m²/g, besonders bevorzugt zwischen 350 bis 600 m²/g. Weiterhin ist ein Verfahren zur Herstellung der aluminiumdotierten Fällungskieselsäuren Gegenstand der Erfindung, wobei nacheinander
a) eine Mischung aus Wasser und Natriumsilikat auf 70 bis 86 °C erhitzt und mit Schwefelsäure bis zur Neutralisation der Hälfte des Natriumsilikats versetzt wird,
b) die Mischung 30 bis 120 Minuten altert,
c) die Mischung durch Zugabe von Schwefelsäure auf einen pH-Wert von 3,0 bis 7,0 eingestellt wird,
d) die Mischung filtriert und der Filterkuchen gewaschen wird,
e) der gewaschene Filterkuchen sprühgetrocknet und/oder vermahlen wird,
mit der Maßgabe, dass in den Verfahrensschritten a) und/oder c) eine Aluminiumsalzlösung zudosiert wird, die Fällungskieselsäure eine BET-Oberfläche von über 300 m²/g, einen Al₂O₃-Gehalt von 0,05 bis 0,5 Gew.-% und eine mittlere Teilchengröße von 5 bis < 15 µm aufweist und das Aluminium gleichmäßig in den Kieselsäurepartikel verteilt ist.

Die so erhaltenen Fällungskieselsäuren können nach ihrer Herstellung abfiltiert und in Form des in Wasser redispergierten Filterkuchens oder nach Trocknung des Filterkuchens (z. B. in Sprühtrockner, Düsenturmtrockner, Spinflashtrockner, Büttnertrockner oder Drehrohröfen) und Vermahlung (Trocken oder Naß, z. B. in einer wet-jet-mill) weiter verwendet werden.

Die genannten Aluminiumsalze können in Form ihrer Salze z. B. in Form von Chloriden, Nitraten, Carbonaten, Oxiden, Hydroxiden, Oxylchloride, Phosphate, Oxyhydroxide, Oxydsulfate, Polycarbonate und/oder Sulfaten zu unterschiedlichen Zeitpunkten und zu unterschiedlichen Stadien des erfindungsgemäßen Verfahrens, d. h. der Fällung zugegeben werden. Es ist möglich, die Aluminiumsalzlösung kontinuierlich während der Verfahrensschritte a) und/oder c) in die Mischung zu dosieren. Weiterhin kann die Aluminiumsalzlösung in Verfahrensschritt a) und/oder in Verfahrensschritt c) jeweils vor der Zugabe der Schwefelsäure in die Mischung dosiert werden. In jeder Ausführungsform wird ein optimaler Einbau, bzw. eine gute chemisch-physikalische Verbindung der Ionen mit der noch im Wachstum befindlichen Kieselsäure/Silikatoberfläche gewährleistet und selbst durch geringe Mengen der Aluminium-Ionen eine hohe wirksame Konzentration an der Oberfläche der Kieselsäurepartikel garantiert.
Hervorzuheben bei dieser Art der Dotierung, dass sich das Aluminium nur durch Zerstörung der Kieselsäure- / der Silikatstruktur wieder entfernen lassen.

Werden die Aluminiumsalze während der gesamten Fälldauer hinzugegeben, so werden diese auch in die inneren Strukturen der Kieselsäure / des Silikates eingebaut. Hierdurch erhält man bei einer optionalen anschließenden Vermahlung (Trocken oder Nassvermahlung) der erfindungsgemäßen Kieselsäuren wieder Teilchen, die an ihrer gesamten Oberfläche kationische Stellen (Sites) aufweisen.

Der prozentuale Anteile des Aluminiums kann in der Oberflächenregionen der Teilchen jedoch ein Vielfaches der über die Teilchenmasse gemittelten Gewichtsprozente betragen, vor allem, wenn die Zugabe am Ende der Zugabe der Schwefelsäure erfolgt.

In einer besonderen Ausführungsform kann in einem oder mehreren der Verfahrensschritte a), b) und c) unter Scherung, z. B. mit einen Dispax-Reaktor, gearbeitet werden.

Die Zugabe des Aluminiums kann auch in einer Schwefelsäurelösung erfolgen. Zweckmässig wird Aluminiumsulfat in der Schwefelsäure gelöst, die auch zur Fällung der Kieselsäure verwendet wird.

Die allgemeinen Parameter der Fällungsreaktion wie Temperatur, Rührgeschwindigkeit, Konzentration der vorgelegten Natriumsilikatlösung oder Schwefelsäure entsprechen denen bei der Herstellung von undotierten Fällungskieselsäuren und können z. B. in DE 117 22 45, EP 0 798 266, DE 314 42 99 oder DE 124 50 06 nachgelesen werden.

### Verwendung der erfindungsgemäßen aluminiumdotierten Fällungskieselsäuren

Heutige Tinten, welche vor allem bei allen Arten des sogenannten Inkjet Drucks und dessen verwandten Verfahren benutzt werden, sind von anionischer Natur. Daher ist bzgl. der Farbmittelfixierung (Farbstoffe und Pigmente), der Farbbrillanz, der Druckschärfe und -tiefe von großer Bedeutung, dass die zu bedruckenden Medien an ihrer Oberfläche, bzw. in ihren Oberflächenregionen, Teilchen mit einer zumindest teilweisen kationischen Oberfläche aufweisen.

Kieselsäuren und Silikate werden heute bereits vielfach für o.g. Formulierungen eines Striches (z.B. Papier-, Folienstrich) eingesetzt. Eine Modifikation dieser Kieselsäuren und Silikaten derart, dass an ihrer Oberfläche aktive, d.h. zugängliche, kationische Stellen (Sites) entstehen, kommt den heutigen Erfordernissen aufgrund der häufig verwendeten anionischen Farbmittel nach.

Aufgrund des Einflusses der eingebauten Metallionen auf den Brechungsindex können sich weitere Vorteile hinsichtlich der Verwendung in transparenten Medien ergeben, so z. B. bei der Verwendung von Kieselsäuren/Silikaten in Strichen für Folien.

Gegenstand der Erfindung ist daher auch die Verwendung der erfindungsgemäßen aluminiumdotierten Kieselsäuren, bzw. der durch das erfindungsgemäße Verfahren hergestellten dotierten Kieselsäuren in Papier, Folien und Leinwänden.

Insbesondere können erfindungsmäßen Kieselsäuren in Papierstrichen von z. B. Inkjet-Papieren und in Strichen für andere bedruckbare Medien, wie z. B. Folien, Overheadfolien oder bedruckbaren Textilien, Leinwänden oder allgemein Papier verwendet werden.

Die erfindungsgemäßen Kieselsäuren können nicht nur als getrocknete und gegebenenfalls vermahlene Produkte eingesetzt werden, sondern auch als Dispersionen. Vorteile in der Weiterverarbeitung bzw. Kostenvorteile liegen vor allem in der Verwendung von dispergierten Filterkuchen der erfindungsgemäßen Fällungskieselsäuren/ bzw.-Silikate.

Die erfindungsgemäßen Fällungskieselsäuren können weiterhin durch die Behandlung mit Silanen wie z. B. in DE 117 22 45, EP 0 798 266, DE 314 42 99 oder DE 107 45 59 beschrieben, ganz oder teilweise hydrophobiert werden.

Es ist für die Verwendung bei der Papierherstellung möglich, den Dispersionen der erfindungsgemäßen Kieselsäuren Hilfsstoffe, die in der Papierindustrie üblich sind, wie z. B. Polyalkohole, Polyvinylalkohol, synthetische oder natürliche Polymere, Pigmente (TiO_{2,} Fe-Oxide, Al-Metallfilter), aber auch undotierte Kieselsäuren (Fällungskieselsäuren oder Aerosile) beizumischen.

Ein weiterer Gegenstand der Erfindung sind Streichfarben-Formulierungen für Papier, enthaltend Polyvinylalkohol und die erfindungsgemäße Aluminium-dotierte Fällungskieselsäure mit einer BET-Oberfläche von über 300 m²/g, wobei das Aluminium gleichmäßig in den Kieselsäurepartikeln verteilt ist, in Form einer Suspension mit einem Feststoffgehalt von 10 bis 30 Gew.-%. Die Aluminium-dotierte Fällungskieselsäure kann wie beschrieben hergestellt werden. In den erfindungsgemäßen Streichfarben-Formulierungen können weitere Bestandteile wie Wasser, Latex, Styrol-Acrylat, Polyvinylacetat und/oder Polyvinylpyrrolidon enthalten sein.

Weiterhin kann die erfindungsgemäß Aluminium-dotierte Fällungskieselsäure als Mattierungsmittel in Lacken verwendet werden.

Als Lacke sind z. B. Alkydharzlacke oder sonstige Einbrennlacke verwendbar.

Die folgenden Beispiele sollen die Erfindung näher erläutern, ohne ihren Umfang zu beschränken.

Die im Standard beschriebene Rezeptur enthält neben Fällungskieselsäure auch pyrogen hergestellte Kieselsäure, die ebenfalls zur Erhöhung der Farbbrillanz beiträgt. So wird deutlich, dass bei Verwendung der erfindungsgemäßen Fällungskieselsäure sogar ohne Zugabe von pyrogenen Kieselsäuren bessere Ergebnisse erzielt werden.

### Beschreibung der Erfindung:

### Vergleichsbeispiele A1, A3 und Beispiel A2:

In das Fällgefäß werden 47 kg Wasser und 16 kg Natriumsilikat (d = 1,35 g/cm³, Modul SiO₂: Na₂O = 3,3) gegeben und das Gemisch unter Rühren auf 75 °C erhitzt. In diese Fällvorlage wird in 30 min Schwefelsäure (50 %, d = 1.340 g/cm³) mit einer Geschwindigkeit von 41.2 ml/min zudosiert. Gleichzeitig werden in dieser ersten Fällstufe über eine zweite Zugabestelle Aluminiumsulfat (d = 1.284 g/cm³, 7.38 Gew.-%) zudosiert. Nach 25 Minuten Fälldauer wird das Scheraggregat (Dispax-Reaktor) zugeschaltet. Kurz nach Ende der Säurezugabe beginnt die Kieselsäure auszuflocken. Die Säurezufuhr bleibt für 60 min unterbrochen (Wartestufe). Danach erfolgt die weitere Säurezugabe mit 47.2 ml/min über einen Zeitraum von weiteren 35 min bei gleichzeitiger Zugabe von Aluminiumsulfat. Danach weist die entstandene Kieselsäuresuspension einen pH-Wert von 3.4 und einen Feststoffgehalt von 73.5 g/l auf. Das Scheraggregat wird ausgeschaltet.

Die Suspension wird über eine Filterpresse gegeben und sulfatfrei gewaschen. Der Filterkuchen wird sprühgetrocknet und das Pulver wird auf einen d₅₀-Wert von 10.5 bis 11.5 µm vermahlen und anschließend gesichtet.

Das getrocknete Produkt hat folgende physikalisch-chemischen Eigenschaften:

| **Bezeichung** | **Einheit** | **Vergleichsbeispiel A1** | **Beispiel A2** | **Vergleichsbeispiel A3** |
|---|---|---|---|---|
| Al₂(SO₄)₃-Lösung | [l] | 0 | 0.26 | 2.25 |
| Dosiergeschw. | [ml/min ] | 0 | | |
| pH | | 6.0 | 7.1 | 6.4 |
| Spez. Oberfläche | [m²/g] | 280 | 315 | 305 |
| DBP-Aufnahme | [g/100g] | 320 | 310 | 240 |
| Stampfdichte | [g/l] | 70 | 70 | 110 |

| Korngrößenverteilung (Malvern) | | | | |
|---|---|---|---|---|
| d₁₀ | [µm] | 5.1 | 4.8 | 4.7 |
| d₅₀ | [µm] | 11.4 | 11.0 | 10.1 |
| d₉₀ | [µm] | 21.2 | 20.7 | 18.3 |
| Al₂O₃-Gehalt | [%] | 0 | 0.5 | 3.8 |

### Vergleichsbeispiele B1, B3 und Beispiel B2

Es erfolgt die Formulierung von Streichfarben auf reiner Kieselsäurebasis mit 15 % bzw. auch 14 % bis 18 % Feststoffgehalt. Die Messung der Viskosität nach Brookfield erfolgt bei 5, 10, 20, 50 und 100 Upm 1 Tag nach dem Ansetzen der Streichfarben. Das Streichen der hergestellten Streichfarben erfolgt auf Standard-Rohpapier mit anschließendem Trocknen und Kalandrieren der Papierproben. Die Durchführung des Printtestes im Vierfarbdruck erfolgt mittels HP Deskjet 550 C und Epson Stylus Color 800.

Die Gesamtbewertung beinhaltet die Einarbeitbarkeit, das Abstreichverhalten, die Strichhaftung, das Aufsaugverhalten und die Bedruckbarkeit.

Zur Herstellung der beispielsweisen Inkjet-Strichfarben, insbesondere der Standardrezeptur, werden 30 Teile Polyvinylalkohol (PVA) in der Gesamtwassermenge vorgelegt und bei 95 °C gelöst. Anschließend wird die Kieselsäure oder die Kieselsäuremischung (gefällte und pyrogene Kieselsäure) bei 1000 Upm eingearbeitet und dann bei 3000 Upm 30 Minuten dispergiert.

Die Streichfarben werden nicht wie üblich mit Additiven und Co-Bindern versetzt. Die Streichfarbenrezeptur wurde nicht weiter auf optimale Eigenschaften hin verbessert. Streichfarbenrezepturen für unterschiedliche Medien werden unter anderem in der Technischen Information Nr. 1212 von Degussa-Hüls, Geschäftsbereich FP, angegeben. Die erfindungsgemäße Verwendung der Fällungskieselsäuren kann auf andere Rezepturen übertragen werden.

Das Streichen der Probe erfolgt mittels Dow-Coater bei 50 m/min blattweise (DIN A4). Die im Dow-Tunneltrockner getrockneten Papiere werden mittels Kalander bei 9 bar/45 °C satiniert.

Die Papiere wurden mittels HP 550 C und mittels Epson Stylus Color 800 im Vierfarbdruckznodus bedruckt.

| **Bezeichung** | **Einheit** | **Vergleichsbeispiel B1** | **Beispiel B2** | **Vegleichsbeispiel B3** | **Standardrezeptur** |
|---|---|---|---|---|---|
| Fällungskieselsäure | | Beispiel A1 | Beispiel A2 | Beispiel A3 | Sip. 30/MOX 170 |
| Feststoffgehalt | [g/l] | 14 | 16 | 18 | 15 |
| Viskosität (Brookfield) nach Aufrühren [mPa*s] | 5 Upm | 10240 | 6880 | 720 | 360 |
| | 10 Upm | 5680 | 4520 | 640 | 420 |
| | 20 Upm | 3180 | 3000 | 640 | 385 |
| | 50 Upm | 1620 | 1830 | 680 | 300 |
| | 100 Upm | 1030 | 1315 | 680 | 250 |
| Haftung des Strichs | | mittel | mittel | mittel | gut |
| Glätte des Strichs | | mittel - rau | mittel | glatt | glatt - mittel |

### Bewertung des Bedruckbarkeit mittels HP 550 C

| **Bezeichung** | **Einheit** | **Vergleichsbeispiel B1** | **Beispiel B2** | **Vergleichsbeispiel B3** | **Standardrezeptur** |
|---|---|---|---|---|---|
| Farbintensität | Magenta/Gelb/Cyan | 3+ | 1 | 3+ | 2 |
| | Schwarz | 2- | 2+ | 2- | 2 |
| Punktschärfe | Schwarz in Farbe | 2 | 2+ | 2+ | 3 |
| Übergänge | Farbe in Farbe | 1 | 1 | 1 | 1 |
| Punktschärfe | Schwarzdruck | 2- | 2+ | 2- | 2 |
| | Schwarzkonturen | 2+ | 2+ | 2+ | 3- |
| Halbton | | 1- | 1 | 1 | 2+ |
| **Summe Bewertung** | | **14** | **10** | **13,25** | **15,25** |

### Bewertung des Bedruckbarkeit mittels Epson Stylus Color 800

| **Bezeichung** | **Einheit** | **Vergleichsbeispiel B1** | **Beispiel B2** | **Vergleichsbeispiel B3** | **Standardrezeptur** |
|---|---|---|---|---|---|
| Farbintensität | Magenta/Gelb/Cyan | 2- | 2+ | 2+ | 2 |
| | Schwarz | 1- | 1 | 1 | 2+ |
| Punktschärfe | Schwarz in Farbe | 2+ | 1 | 1 | 2 |
| Übergänge | Farbe in Farbe | 1- | 1 | 1 | 1 |
| Punktschärfe | Schwarzdruck | 1- | 1 | 1 | 2+ |
| | Schwarzkonturen | 1- | 1 | 1 | 2+ |
| Halbton | | 1- | 1 | 1 | 1- |
| **Summe Bewertung** | | **11,75** | **7,75** | **7,75** | **11,75** |

Die Gesamtbewertung der Viskosität, des Striches und der Bedruckbarkeit zeigt den Vorteil der erfindungsgemäßen Aluminium-dotierten Fällungskieselsäure hinsichtlich deren Verwendung in Inkjet-Medien auf.

| **Farbintensität** | | | | **Punktschärfe** | | **Übergänge** | | **Punktschärfe** | | | | **Halbtondruck** | |
|---|---|---|---|---|---|---|---|---|---|---|---|---|---|
| **Magenta**/**Gelb**/**Cyan** | | **Schwarz** | | **Schwarz in Farbe** | | **Farbe in Farbe** | | **Schwarzdruck** | | **Schwarzkonturen** | | **Farbintensität/Konturen** | |
| 1+ | Leuchtend, kräftig intensiv | 1 | Voller Farbton, kräftig intensiv | 1 | Klare Trennung, sehr gute bis gute Schärfe | 1 | Klare Trennung, klar abgegrenzt | 1 | Voller Farbton, kräftig intensiv | 1 | Klare Trennung, sehr gute bis gute Schärfe | 1 | Grauton, optimal deutlich, Feinlinien abgegrenzt |
| 1 | Matt, kräftig intensiv | | | 2 | Leichter Verlauf, noch gute bis mittlere Schärfe | 2 | Leichter Verlauf, noch gute Abgrenzung | | | 2 | Leichter Verlauf, noch gute bis mittlere Schärfe | 2 | Grauton verschwommen, Feinlinien abgegrenzt |
| 2 | Matt, blaß | | | | | 3 | Verlaufen, etwas verschwommen | | | | | 3 | Grauton optimal deutlich, Feinlinien verschwommen |
| 3+ | Leuchtend, fleckig | 4 | Ausgewaschener, blasser Farbton | 4 | Ausgeblutet, verlaufen, verschwommen | | | 4 | Ausgewaschener, blasser Farbton | 4 | Ausgeblutet, verlaufen, verschwommen | 4 | Grauton verschwommen, Feinlinien verschwommen |
| 3 | Matt, fleckig | | | 5 | Starker Verlauf, kaum leserlich | 5 | Starker Verlauf | | | 5 | Starker Verlauf, kaum leserlich | 5 | Grauton dunkel bis schwarz, Feinlinien verschwommen |
| 3- | Kräftig intensiv, marmoriert | 6 | Sehr stark ausgewaschener Farbton u./o. marmoriert | 6 | Sehr starker Verlauf, unscharf, unleserlich | 6 | Sehr starker Verlauf, neue Farbtöne im Über-lappungsbereich | 6 | Sehr stark ausgewaschener Farbton u./o. marmorisiert | 6 | Sehr starker Verlauf in die Fläche, unscharf, unleserlich | 6 | Grauton schwarz, durchgefärbt, Feinlinien kaum erkennbar |
| 4 | Matt, marmoriert | | | | | | | | | | | | |
| 5 | Blaß, marmoriert | | | | | | | | | | | | |
| 6 | Sehr matt u./o. marmoriert | | | | | | | | | | | | |

## Patentansprüche

1. Aluminium-dotierte Fällungskieselsäuren,
**dadurch gekennzeichnet,**
**dass** die Kieselsäurepartikel eine BET-Oberfläche von über 300 m²/g, einen Al₂O₃-Gehalt von 0,05 bis 0,5 Gew.-% und eine mittlere Teilchengröße von 5 bis <15 µm aufweisen und das Aluminium gleichmäßig in den Kieselsäurepartikeln verteilt ist.

2. Aluminium-dotierte Fällungskieselsäuren nach Anspruch 1,
**dadurch gekennzeichnet,**
**dass** die Fällungskieselsäure mit Al₂O₃ dotiert ist.

3. Aluminium-dotierte Fällungskieselsäuren nach Anspruch 1 oder 2,
**dadurch gekennzeichnet,**
**dass** die dotierten Kieselsäurepartikel eine mittlere Teilchengröße von 5 bis 12 µm aufweisen.

4. Aluminium-dotierte Fällungskieselsäure nach einem der Ansprüche 1 bis 3,
**dadurch gekennzeichnet,**
**dass** die dotierte Kieselsäure eine DBP-Aufnahme von 500 bis 200 g/100 g aufweist.

5. Verfahren zur Herstellung von aluminiumdotierter Fällungskieselsäure,
**dadurch gekennzeichnet,**
**dass** nacheinander
a) eine Mischung aus Wasser und Natriumsilikat auf 70 bis 86° C erhitzt und mit Schwefelsäure bis zur Neutralisation der Hälfte des Natriumsilikats versetzt wird,
b) die Mischung 30 bis 120 Minuten altert,
c) die Mischung durch Zugabe von Schwefelsäure auf einen pH-Wert von 3,0 bis 7,0 eingestellt wird,
d) die Mischung filtriert und der Filterkuchen gewaschen wird,
e) der gewaschene Filterkuchen sprühgetrocknet und/oder vermahlen wird, mit der Maßgabe, dass in den Verfahrensschritten a) und/oder c) eine Aluminiumsalzlösung zudosiert wird, die Fällungskieselsäure eine BET-Oberfläche von über 300 m²/g, einen Al₂O₃-Gehalt von 0,05 bis 0,5 Gew.-% und eine mittlere Teilchengröße von 5 bis < 15 µm aufweist und das Aluminium gleichmäßig in den Kieselsäurepartikel verteilt ist.

6. Verfahren nach Anspruch 5,
**dadurch gekennzeichnet,**
**dass** die Aluminiumsalzlösung in Verfahrensschritt a) vor der Schwefelsäure zu der Mischung aus Wasser und Natriumsilikat gegeben wird.

7. Verfahren nach Anspruch 5,
**dadurch gekennzeichnet,**
**dass** die Aluminiumsalzlösung kontinuierlich während der Verfahrensschritte a) und/oder c) zudosiert wird.

8. Verfahren nach Anspruch 5,
**dadurch gekennzeichnet,**
**dass** die Aluminiumsalzlösung in Verfahrensschritt c) vor der Zugabe der Schwefelsäure zudosiert wird.

9. Verfahren nach einem der Ansprüche 5 bis 8,
**dadurch gekennzeichnet,**
**dass** mindestens einer oder mehrere der Verfahrensschritte a), b) und c) unter Scherung durchgeführt wird.

10. Verwendung von aluminiumdotierten Fällungskieselsäuren mit einer BET-Oberfläche von über 300 m²/g, einem Al₂O₃-Gehalt von 0,05 bis 0,5 Gew.-% und einer mittleren Teilchengröße von 5 bis <15 µm, bei denen das Aluminium gleichmäßig in den Kieselsäurepartikeln verteilt ist, in Papier, Folien, Leinwänden.

11. Verwendung von aluminiumdotierten Fällungskieselsäuren mit einer BET-Oberfläche von über 300 m²/g, einem Al₂O₃-Gehalt von 0,05 bis 0,5 Gew.-% und einer mittleren Teilchengröße von 5 bis <15 µm, bei denen das Aluminium gleichmäßig in den Kieselsäurepartikeln verteilt ist, als Mattierungsmittel für Lacke.

12. Streichfarbenformulierung für Papier, enthaltend Polyvinylalkohol und aluminiumdotierte Fällungskieselsäure mit einer BET-Oberfläche von über 300 m²/g, einen Al₂O₃-Gehalt von 0,05 bis 0,5 Gew.-% und einer mittleren Teilchengröße von 5 bis <15 µm, bei denen das Aluminium gleichmäßig in den Kieselsäurepartikeln verteilt ist, in Form einer Suspension mit einem Feststoffgehalt von 10 bis 30 Gew.-%.

## Claims

1. Aluminium-doped precipitated silica, **characterised in that** the silica particles have a BET surface area of more than 300 m²/g, an Al₂O₃ content of from 0.05 to 0.5 % by weight and an average particle size of from 5 to < 15 µm and the aluminium is distributed uniformly in the silica particles.

2. Aluminium-doped precipitated silica according to claim 1, **characterised in that** the precipitated silica is doped with Al₂O₃.

3. Aluminium-doped precipitated silica according to claim 1 or 2, **characterised in that** the doped silica particles have an average particle size of from 5 to 12 µm.

4. Aluminium-doped precipitated silica according to any one of claims 1 to 3, **characterised in that** the doped silica has a DBP absorption of from 500 to 200 g/100 g.

5. Process for preparing aluminium-doped precipitated silica, **characterised in that** it comprises successively
a) heating a mixture of water and sodium silicate at from 70 to 86 °C and adding sulphuric acid until half of the sodium silicate is neutralised,
b) aging the mixture for from 30 to 120 minutes,
c) adjusting the mixture to a pH of from 3.0 to 7.0 by adding sulphuric acid,
d) filtering the mixture and washing the filter cake,
e) spray-drying and/or grinding the washed filter cake,
with the proviso that an aluminium salt solution is added in steps a) and/or c) of the process, the precipitated silica has a BET surface area of more than 300 m²/g, an Al₂O₃ content of from 0.05 to 0.5 % by weight and an average particle size of from 5 to < 15 µm and the aluminium is distributed uniformly in the silica particles.

6. Process according to claim 5, **characterised in that** the aluminium salt solution is added to the mixture of water and sodium silicate in step a) of the process prior to the sulphuric acid.

7. Process according to claim 5, **characterised in that** the aluminium salt solution is added continuously during steps a) and/or c) of the process.

8. Process according to claim 5, **characterised in that** the aluminium salt solution is added in step c) of the process prior to the addition of the sulphuric acid.

9. Process according to any one of claims 5 to 8, **characterised in that** at least one or more of steps a), b) and c) of the process is or are carried out with shearing.

10. Use of aluminium-doped precipitated silica having a BET surface area of more than 300 m²/g, an Al₂O₃ content of from 0.05 to 0.5 % by weight and an average particle size of from 5 to < 15 µm, in which the aluminium is distributed uniformly in the silica particles, in paper, films or fabric screens.

11. Use of aluminium-doped precipitated silica having a BET surface area of more than 300 m²/g, an Al₂O₃ content of from 0.05 to 0.5 % by weight and an average particle size of from 5 to < 15 µm, in which the aluminium is distributed uniformly in the silica particles, as matting agents for coating materials.

12. Coloured coating formulation for paper, comprising polyvinyl alcohol and aluminium-doped precipitated silica having a BET surface area of more than 300 m²/g, an Al₂O₃ content of from 0.05 to 0.5 % by weight and an average particle size of from 5 to < 15 µm, in which the aluminium is distributed uniformly in the silica particles, in the form of a suspension having a solids content of from 10 to 30 % by weight.

## Revendications

1. Acides siliciques précipités dopés à l'aluminium,
**caractérisé en ce que**
les particules d'acide silicique ont une surface BET de plus de 300 m²/g, une teneur en Al₂O₃ comprise entre 0,05 et 0,5 % en poids et une granulométrie moyenne de 5 à < 15 µm, et l'aluminium est réparti uniformément dans les particules d'acide silicique.

2. Acides siliciques précipités dopés à l'aluminium selon la revendication 1,
**caractérisé en ce que**
l'acide silicique est dopé à Al₂O₃.

3. Acides siliciques précipités dopé à l'aluminium selon les revendications 1 et 2,
**caractérisé en ce que**
les particules d'acide silicique dopé ont une granulométrie moyenne de 5 à 12 µm.

4. Acides siliciques précipités dopés à l'aluminium selon l'une des revendications 1 à 3,
**caractérisé en ce que**
l'acide silicique dopé présente une absorption DBP de 500 à 200g/ 100g.

5. Procédé de fabrication d'acide silicique dopé à l'aluminium,
**caractérisé en ce que**
successivement,
a) un mélange d'eau et de silicate de sodium est chauffé entre 70 et 86° C et mis en réaction avec de l'acide sulfurique jusqu'à la neutralisation de la moitié du silicate de sodium,
b) le mélange est mis au repos pendant 30 à 120 minutes,
c) le pH du mélange est réglé à une valeur comprise entre 3,0 et 7,0 par addition d'acide sulfurique,
d) le mélange est filtré et le gâteau de filtration est lavé,
e) le gâteau de filtration lavé est séché par pulvérisation et/ou moulu, étant précisé que, dans les étapes a) et/ou c) une solution de sel d'aluminium est ajoutée de façon dosée, l'acide silicique précipité a une surface BET de plus de 300 m² /g, une teneur en Al₂O₃ de 0,05 à 0,5 % en poids, et une granulométrie moyenne de 5 à moins de 15 mm, et que l'aluminium est réparti uniformément dans les particules d'acide silicique.

6. Procédé selon la revendication 5,
**caractérisé en ce que**
dans l'étape a) la solution de sel d'aluminium est ajoutée au mélange d'eau et de silicate de sodium avant l'acide sulfurique.

7. Procédé selon la revendication 5,
**caractérisé en ce que**
la solution de sel d'aluminium est ajoutée par dosage en continu pendant les étapes a) et/ou c).

8. Procédé selon la revendication 5,
**caractérisé en ce que**
dans l'étape c) la solution de sel d'aluminium est ajoutée par dosage avant l'addition d'acide sulfurique.

9. Procédé selon l'une des revendications 5 à 8,
**caractérisé en ce qu'**
au moins l'une des étapes a), b), et c) est mise en oeuvre sous cisaillement.

10. Utilisation d'acides siliciques précipités dopés à l'aluminium ayant une surface BET de plus de 300 mm²/g, une teneur en Al₂O₃ de 0,05 à 0,5 % en poids et une granulométrie moyenne de 5 < de 15 µm, selon laquelle l'aluminium est réparti uniformément dans les particules d'acide silicique dans du papier, des films ou des écrans.

11. Utilisation d'acides siliciques précipités dopés à l'aluminium ayant une surface BET de plus de 300 m² /g, une teneur en Al₂O₃ de 0,05 à 0,5 % en poids et une granulométrie moyenne de 5 à < 15 µm selon laquelle l'aluminium est réparti uniformément dans les particules d'acide silicique comme agent de matage pour vernis.

12. Formulation de colorant de revêtement pour le papier renfermant de l'alcool polyvinylique et de l'acide silicique de précipitation dopé à l'aluminium ayant une surface BET de plus de 300 m²/g, une teneur en Al₂O₃ de 0,05 à 0,5 % en poids et une granulométrie moyenne de 5 à < 15 µm, dans laquelle l'aluminium est réparti uniformément dans les particules d'acide silicique, sous forme d'une suspension ayant une teneur en matières solides comprise entre 10 et 30% en poids.
